Europäisches Patentamt

European Patent Office

Office européen des brevets

(19)

(11) EP 1 209 950 A1

# (12) EUROPEAN PATENT APPLICATION
published in accordance with Art. 158(3) EPC

(43) Date of publication:
29.05.2002 Bulletin 2002/22

(51) Int Cl.⁷: $H05B\ 3/20$, $H05B\ 3/14$, $H05B\ 3/03$

(21) Application number: 00946456.1

(22) Date of filing: 21.07.2000

(86) International application number:
PCT/JP00/04910

(87) International publication number:
WO 01/08450 (01.02.2001 Gazette 2001/05)

(84) Designated Contracting States:
AT BE CH CY DE DK ES FI FR GB GR IE IT LI LU MC NL PT SE

(30) Priority: 22.07.1999 JP 20780499

(71) Applicant: TOYO TANSO CO., LTD.
Osaka-shi, osaka 555-0011 (JP)

(72) Inventors:
• KONDO, Teruhisa, Toyo Tanso Co., Ltd.
  Osaka-shi, Osaka 555-0011 (JP)
• KUSUYAMA, Toshiki, Toyo Tanso Co., Ltd.
  Osaka-shi, Osaka 555-0011 (JP)
• TOJO, Teturo, Toyo Tanso Co., Ltd.
  Mitoyo-gum, Kagara769-1612 (JP)

• KAMIYAMA, Minehiro, Toyo Tanso Co., Ltd.
  Mitoyo-gum, Kagara 769-1612 (JP)
• IZUMIYA, Masaki, Toyo Tanso Co., Ltd.
  Mitoyo-gum, Kagara 769-1612 (JP)
• INOMOTO, Hideki, Toyo Tanso Co., Ltd.
  Mitoyo-gum, Kagawa 769-1102 (JP)
• HAYAKAWA, Hiroshi, Toyo Tanso Co., Ltd.
  Mitoyo-gum, Kagara 769-1612 (JP)

(74) Representative: Selting, Günther et al
Patentanwälte
von Kreisler, Selting, Werner
Deichmannhaus
Postfach 10 22 41
50462 Köln (DE)

## (54) HEATING ELEMENT

(57) An object of the invention is to provide a heat generator having an expanded graphite sheet which is excellent in mechanical strength and flexibility and which is satisfactory in electrical properties as required by a heater, and especially a heat generator which is usable as a heater for the seats of vehicles, and the object of the invention can be achieved by forming an electrical insulating reinforcement on at least one surface of the expanded graphite sheet.

Fig 4

EP 1 209 950 A1

**Description**

Field of the Invention

The present invention relates to a heat generator, and more particularly to a heat generator which comprises an expanded graphite sheet and which is excellent as a heater for vehicles.

Background Art

It is known that expanded graphite sheets are useful as a heat generator, particularly as a heater sheet. However, the expanded graphite sheets have a drawback of being not invariably superior in strength and flexibility, posing a problem when used as a heat generator. Especially this defect is a serious problem when an expanded graphite sheet is used for vehicles which require great strength and high flexibility, and among others, for seats of vehicles.

The problem to be overcome by the present invention is to obviate the foregoing drawback conventionally involved. Stated more specifically, an object of the invention is to develop a heat generator comprising an expanded graphite sheet which is superior in strength and flexibility, particularly a heat generator which comprises an expanded graphite sheet and which is usable as a heater for vehicles.

Disclosure of the Invention

The problem can be overcome by a heat generator which comprises an expanded graphite sheet and an electrical insulating reinforcement formed on at least one surface of the graphite sheet. Preferred electrical insulating reinforcements are reticulated electrical insulating reinforcements. Among them, those fabricated from a film of synthetic resin or those woven from natural fibers and/or synthetic fibers are more preferred.

The heat generator of the invention has an electrical insulating layer formed on at least one surface of the expanded graphite sheet to improve the strength and flexibility as well as to impart the electrical insulating properties. Consequently the heat generator of the invention basically has an electrical insulating reinforcement formed on at least one surface of the graphite sheet.

Since an electrical insulating reinforcement is formed on at least one surface of the expanded graphite sheet, the heat generator of the invention has electrical insulating properties so that it can be used as a heater and possesses the mechanical strength and flexibility required by a heat generator (which may be hereinafter referred to as "heater").

According to the invention, the heater of the invention has preferably a reticulated electrical insulating reinforcement, more preferably a reticulated electrical insulating reinforcement fabricated from a film of synthetic resin or one woven from natural fibers and/or synthetic fibers to enhance the strength and flexibility.

It is desirable in the present invention to use an expanded graphite sheet which is excellent both in mechanical strength and electrical insulating properties.

When the electrical insulating reinforcement is formed on at least one surface of the expanded graphite sheet which is superior in strength and flexibility, significantly high strength and flexibility is imparted, due to their synergistic effect, to the sheet so that the heat generator is the most suitable as a heater for vehicles which require great strength and high flexibility, e.g. as a heater for seats of vehicles such as trains, automobiles, vessels, aircraft or the like, particularly as a heater for automotive seats.

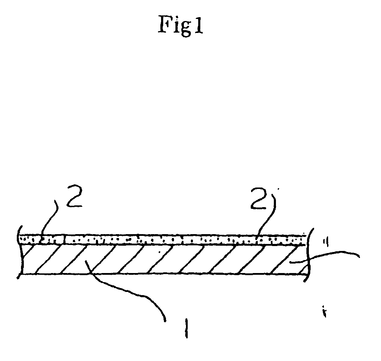

A typical embodiment of the heater according to the present invention has an electrical insulating reinforcement 2 formed on one surface of an expanded graphite sheet 1 as shown in Fig.1. The expanded graphite sheet 1 has a thickness of 0.1 mm or more, preferably about 0.15 to about 0.3 mm, and a density of about 1.20 to about 1.30 g/cm$^3$. The reinforcement 2 formed on the sheet has a thickness of about 10 to about 50 μm, preferably about 20 to about 30 μm.

The heater of the invention has a tensile strength of 100 kgf/cm$^2$ or more, preferably 130 to 200 kgf/cm$^2$, and an elongation percentage on rupture of 5.0% or longer, preferably 8 to 12% (each at a stress rate of 50 mm/min). When the electrical insulating reinforcement 2 is formed as described above on only one surface of the expanded graphite sheet 1, the front surface (on which the reinforcement 2 is not formed) has a resistance of 1.0 to 200 ohms, preferably 1.5 to 50 ohms, and the rear surface (on which the reinforcement 2 is formed) has a resistance of $1.0 \times 10^5$ ohms or more preferably $1.0 \times 10^6$ ohms or more.

When the heat generator is used as a heater for vehicles, especially for vehicle seats, the tensile strength and elongation percentage are among desirable properties. The resistance of the front surface and the resistance of the rear surface are preferably in the foregoing specific ranges because of the limitation on voltage and current and the size of seats. The heater of the invention can be used not only for seats but also for heating the floor, the wall or the carpet.

The expanded graphite sheet to be used in the invention which has the following properties are the most preferred.

Tensile strength: 50 kgf/cm$^2$ or more (a stress rate of 50 mm/min)
Elongation percentage on rupture: 1.5 to 5.0% (a stress rate of 50 mm/min)
Electrical resistivity: 4,000 to 200,000 $\mu\Omega$cm

The expanded graphite sheet is formed, for example, by the following method.

A sheet is produced by suspending the following components (A) to (D) in water to give a slurry for papermaking, and making the slurry into a sheet by a wet papermaking method:

(A) 70 to 90% by weight of expanded graphite particles (which are produced by expanding graphite to 50 folds or more on the average, compressing the expanded graphite to a bulk density of 0.02 to 2.0 g/cm$^3$, and pulverizing the same);

(B) 3 to 15% by weight, preferably 5 to 10% by weight, of aramide pulp with a specific surface area of 3.0 m$^2$/g or more prepared by fibrillating aramide fibers;

(C) 3 to 10% by weight, preferably 5 to 9% by weight, of rubber latex serving as a binder; and

(D) 0 to 10% by weight, preferably 3 to 6% by weight, of inorganic fibers and/or an electrically conductive filler.

The expanded graphite to be used in the invention is graphite expanded to 50 folds or more on the average. More specifically, use is made of only particles of graphite expanded to 50 folds or more, or a mixture of particles of graphite expanded to 50 folds or less and particles of graphite expanded to 50 folds or more, provided that the mixture has a total expansion ratio of 50 folds or more. However, an average expansion ratio of less than 50 folds degrades the flexibility of the obtained sheet.

The expanded graphite is compressed to a bulk density of 0.02 to 2.0 g/cm$^3$, preferably 0.02 to 1.6 g/cm$^3$, more preferably 0.05 to 1.0 g/cm$^3$.

The compressed expanded graphite can be pulverized by wet or dry pulverizing method in the invention. In the case of the wet method, a mixture of compressed expanded graphite and water is pulverized, and the obtained particles are used without separation from water in preparation of a slurry. The obtained particles have such a size that the particles are sifted through a sieve of 50 meshes, or preferably the particles are sifted through a sieve of 60 to 100 meshes.

The aramide pulp will be described below. Useful aramide pulps include, for example, conventional ones disclosed in JP-A-Hei 04-240295.

Rubber latex is used as a binder in the invention. The rubber latex, which is highly flexible, is conveniently used for the purpose of giving a thinner sheet to improve the mechanical strength. Specific examples are SBR, NBR, acrylic rubber and like latexes.

In the invention, use is made of inorganic fibers and/or electrically conductive fillers. Examples of useful inorganic fibers are various kinds of fibers such as asbestos fibers, glass fibers, ceramic fibers, slag wool, quartz fibers, high silica fibers, alumina silicate fibers, alumina fibers, zirconia fibers, boron nitride fibers, alkali titanate fibers, boron fibers, carbon fibers, metal fibers, sepiolite and the like.

The electrically conductive filler to be used in the invention can be used alone or in mixture with inorganic fibers. Examples of useful fillers are carbon black, amorphous metal powder, etc. among which carbon black is preferred.

A dispersant may be used in the invention to improve the dispersibility of fibers, when so required.

When paper is made from a slurry usually by a wet papermaking method under conventional conditions for wet papermaking methods using conventional papermaking apparatus.

In the invention/reticulated electrical insulating reinforcements are preferred in view of increased strength and flexibility. The network structure of reticulated reinforcements is not limited in the size of nets and the thickness of the line forming the net insofar as they are reticulated. Specific examples of reticulated reinforcements are network sheets fabricated from a film of polyvinyl alcohol, polyethylene, polypropylene or like synthetic resins, and those woven (e.g. victoria lawn) from cotton or like natural fibers or synthetic fibers, such as glass fibers and so on.

Preferred reticulated reinforcements to be used in the invention include those made of polyvinyl alcohol and those formed of cotton. Description is now given on typical reticulated reinforcements.

Typical examples of reticulated reinforcements formed of polyvinyl alcohol (hereinafter referred to as PVA) include commercially available products comprising widthwise and lengthwise twisted stretched slit films formed of PVA which have a less number of openings and are superior in electrical insulating properties. Examples of reticulated reinforcements formed of cotton include victoria lawn made of cotton.

As described above, various kinds of reticulated reinforcements can be used in the invention. Typical reticulated reinforcements have the following properties.

| Kind of reinforcements | Basis weight (g/m$^2$) | Breaking force (kgf/ 25mm width) | Elongation percentage (%) |
|---|---|---|---|
| Reticulated reinforcements formed of PVA | 17 | 3.1 | 14.9 |
| Victoria lawn formed of cotton | 25 | 4.0 | 18.1 |
| Victoria lawn formed of vinylon | 32 | 6.8 | 13.0 |

Among major features of reticulated reinforcements formed of PVA is that these reinforcements can be firmly and integrally formed on the surface of an expanded graphite sheet without use of an adhesive. A typical process of forming the reinforcement is described below.

Paper is made from a slurry containing expanded graphite and other essential components using a long net. The paper sheet is passed through a pair of press rolls to give an expanded graphite sheet. Then a reticulated reinforcement formed of PVA is pressed down on the expanded graphite sheet with felt by, e.g. a cylindrical drier and is dried. When the reticulated reinforcement formed of PVA is inserted into an inlet opening of the drier, the reticulated reinforcement surface becomes melted due to hot water generated from the expanded graphite sheet and becomes integrally fixed to the expanded graphite sheet.

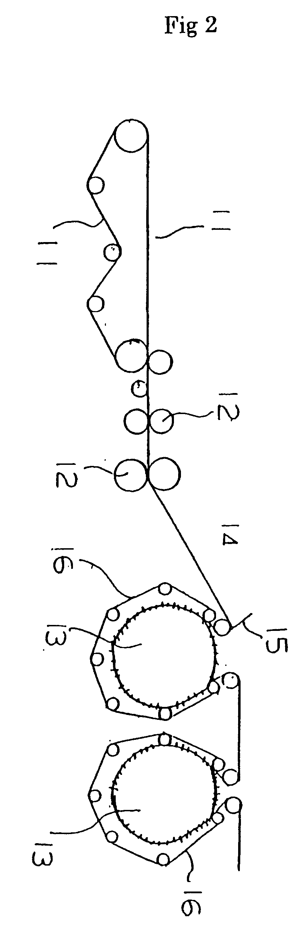

The drier which is operated at a temperature of 100 to 120°C can dry the water and can adhere the reinforcement of PVA to the sheet at the same time. This process is illustrated in Fig.2.

In Fig.2, indicated at 11 is a papermaking device of long net type; at 12, a pair of press rolls; at 13, a Yankee drier; at 14, an expanded graphite sheet; at. 15, the reticulated reinforcement formed of PVA; and at 16, felt. The paper sheet made by the papermaking device of long net type 11 is passed through a pair of press rolls 12 to form an expanded graphite sheet 14, which is then transported to the Yankee drier 13. Then, the reticulated reinforcement formed of PVA 15 is supplied and is moved around the Yankee drier 13 together with the expanded graphite sheet 14 by the felt 16 to integrally combine with the sheet 14.

The reticulated reinforcement formed of cotton or vinylon can be formed on the surface of expanded graphite sheet by the following method.

Paper is made from a slurry of raw materials containing expanded graphite using a long net. The obtained paper sheet is passed through a pair of press rolls to give an expanded graphite sheet. Then a reticulated reinforcement formed of cotton or vinylon coated with a conventional adhesive (e.g. PVA) is pressed on the expanded graphite sheet as superimposed on the sheet and is dried. The method using the reticulated reinforcement formed of cotton or vinylon is carried out in the same manner as the method shown in Fig.2.

The heater of the invention can be prepared by the following method other than that described above. A hot pressing molding method is employable using a mold having a heater-shaped cavity. A mixture of the foregoing components (A) to (D) is placed in the mold and heat is applied to the mold to form an integrally molded product. If the mold cavity has a slit cut on the heater, a heater with a slit cut can be produced without post fabrication. Further, if an electrical insulating reinforcement is set on the bottom of the mold cavity, the reinforcement is integrally formed without conducting an adhering step. The producing process of the invention is not limited to that described above.

In the invention, an electrical insulating reinforcement is usually formed on any one surface of the expanded graphite sheet but may be formed on both surfaces thereof when so required.

In the invention, as described above a reinforcement fabricated from a film of synthetic resin such as a reticulated reinforcement formed of PVA is economically formed on the surface of the expanded graphite sheet. Optionally a fabric of natural fibers or synthetic fibers, e.g. a fabric of cotton, is adhered to the surface of expanded graphite sheet, whereby the heater is made the most suitable as a heater for the seat of vehicles, especially as a heater for automotive seats which require great strength.

Terminals for power connector need to be provided at an end of the heater. The means for forming terminals are not limited and include, for example, the following preferred means.

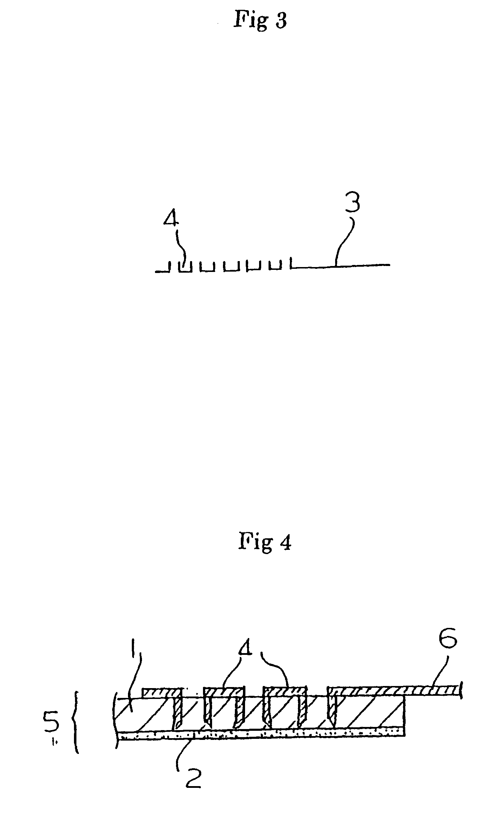

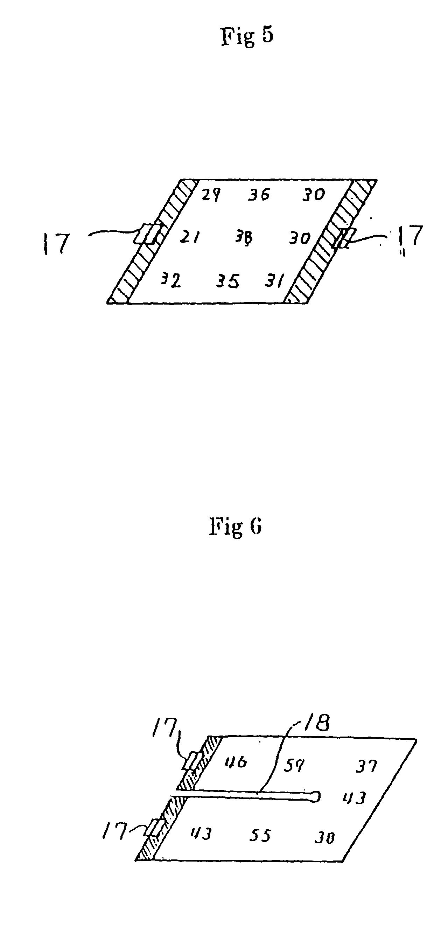

A thin sheet of metal serving as an electrically conductive material, such as stainless steel (typically SUS-304), is fabricated into a hook-like metal piece as shown in Fig.3. The obtained metal piece is pressed and buried into the heater sheet by a press or rolls to provide an integral structure as shown in Fig.4. In Fig.3, a stainless steel sheet is designated 3 and the hook portion is designated 4.

In Fig.4, the heater sheet of the invention is indicated at 5 and the stainless steel sheet portion without a hook, at 6. The numerals 1 and 2 indicate like members in Fig.1.

A slit cut can be made on the heater of the invention locally or in its entirety. The heater of the invention can increase the resistance and can adjust the caloric value by making a slit cut, so that the slit cut is preferred from a viewpoint of practical benefit.

Typical methods of making slit cuts are those wherein a slit cut is made after the reticulated reinforcement is adhered to the expanded graphite sheet and those wherein a reticulated reinforcement is formed in its entirety after a slit cut is made on the expanded graphite sheet.

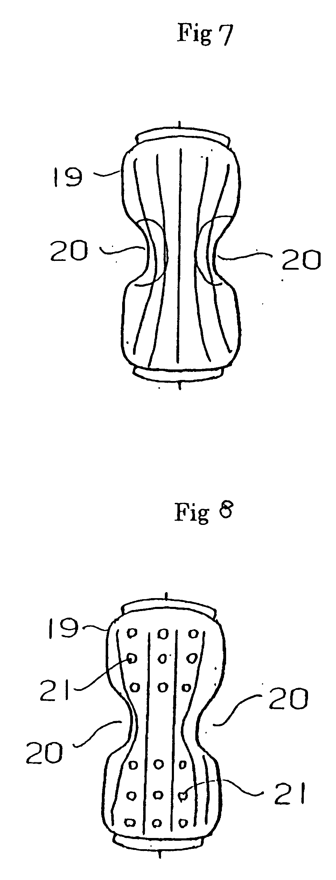

When, for example, a deep draw heater 19 shown in Fig.7 is used, a current is concentrically passed through an indented portion 20 shown in Fig.7 to increase the caloric value at this part compared with the value at other parts, making it difficult to apply heat at a constant temperature.

In this case, if small holes 21 are uniformly formed over the heater as shown in Fig. 8, the irregular caloric value at the indented part 20 can be made regular. The size of small holes 21 and the number thereof can be suitably determined depending on the size of the indented part 20 and the amount of current.

The heater of the invention is satisfactory in various electrical properties and has the strength required by the heater. Especially a heater comprising the expanded graphite sheet and a reinforcement fabricated from a film of synthetic resin, or a heater reinforced with a fabric of natural fibers or synthetic fibers has excellent strength.

Detailed Description of the Drawings

Fig.1 is a sectional view showing a typical example of the heater of the invention.

Fig.2 is a view for describing a process for integrally forming a reticulated reinforcement on an expanded graphite sheet.

Fig.3 is a view for describing a metal thin sheet having a hook which is used for linking a terminal for power connector.

Fig.4 is a view for describing an example wherein terminals for power connector are provided on the heater sheet of the invention.

Fig.5 is a view showing an example of a heater without a slit cut which was used in testing the heater for the elevation of temperature.

Fig.6 shows another example of the heater having a slit cut which was used in the same test as in Fig.5.

Fig.7 is a schematic view showing the heater in the form of deep drawing.

Fig.8 is a schematic view showing the heater of the invention in the form of deep drawing.

Field of the Invention

The invention relates to a heater, and more particularly to a heater having an expanded graphite sheet.

Best Mode for Carrying Out the Invention

The invention will be described in more detail with reference to Examples illustrating preferable embodiments.

Example 1

An expanded graphite sheet was prepared by the following method using the components (raw materials) shown in Fig.1 according to the composition shown therein.

Uniformly dispersed were expanded graphite (expanded to 200 folds on the average, compressed to a bulk density of about 0.8 $g/cm^3$ and pulverized), aramide pulp with a specific surface area of about 14.0 $cm^2/g$ prepared by fibrillating aramide fibers, rubber latex serving as a binder and carbon fibers for adjusting the electrical resistance of the sheet. A small amount of a bonding agent was added to the dispersion and the mixture was suspended in water to give a slurry. Then, the slurry was made into paper by a wet papermaking process.

Table 1

| Raw material | Proportion (weight) | Remark |
|---|---|---|
| Expanded graphite | 80% | Bulk density 0.8 $g/cm^3$ |
| Aramide pulp | 7% | Specific surface area 14 $m^2/g$ |
| Carbon fibers | 4% | Pitch-based carbon fibers |

Table 1   (continued)

| Raw material | Proportion (weight) | Remark |
|---|---|---|
| Rubber latex | 9% | Acrylic rubber latex |
| Bonding agent | A small proportion | Used for bonding the latex |
| Total | 100% | |

Some properties of the obtained expanded graphite sheet were evaluated with the results shown in Fig.2.

Table 2

| | Unit | Expanded graphite sheet |
|---|---|---|
| Thickness | mm | 0.24 |
| Density | $g/cm^3$ | 1.20 |
| Tensile strength | $kgf/cm^2$ | 80 |
| Elongation percentage on rupture | % | 3.5 |
| Burst strength | $kgf/cm^2$ | 1.16 |
| Surface resistance | $\Omega$ | 1.5 |
| Electrical resistivity | $\mu\Omega\cdot cm$ | 8000-10000 |

A reticulated reinforcement formed of PVA (a sheet composed of widthwise and lengthwise twisted stretched slit films formed of PVA, thickness 25 μm was integrally adhered under pressure to one surface of the thus-obtained expanded graphite sheet by hot water in the drying step, whereby a heater was produced.
Some properties of the heater were determined. The results are shown in Table 3.

Table 3

| | Unit | Heater sheet |
|---|---|---|
| Thickness | mm | 0.26 |
| Basis weight | $g/m^2$ | 300 |
| Tensile strength | $Kgf/cm^2$ | 135 |
| Elongation percentage on rupture | % | 8.0 |
| Tear strength | kgf | 6.0 |
| Burst strength | $Kgf/cm^2$ | 2.53 |
| Front surface resistance | $\Omega$ | 1.6 |
| Rear surface resistance | $\Omega$ | $1.0 \times 10^6$ or more |

The properties shown in Tables 2 and 3 were evaluated as follows.

Tensile strength and elongation percentage on rupture:

These properties were determined at a stress rate of 50 mm/min using a material tester.

Front surface (or rear surface) resistance:

The front surface (or rear surface) resistance was measured while the measuring terminals of a resistance meter were applied to the front surface (rear surface) of the sheet. The distance between the measuring terminals was 1 cm.

Tear strength:

The tear strength was measured under the same conditions as in measurement of tensile strength using a material for measuring the tensile strength (width 25 mm, length 150 mm) with a 5mm cut made at one side in the center portion of the material.

Burst strength: A Mullen low pressure tester was used. A test piece (70 x 70 mm) used is one produced by the method according to JIS P8110. The test piece was subjected to pre-treatment and measured under JIS P8111. The burst strength was expressed in terms of a maximum pressure (kgf/cm$^2$) under which the test piece was burst. Method of measuring the electrical resistivity:

A constant amount of current was passed through a specimen (20 X 100 mm) and a voltage (E) between two points spaced at a constant distance was measured to give a resistivity of the specimen. The electrical resistivity ($\mu\Omega\cdot$cm) is represented by the following equation.

$$\text{Electrical resistivity} = E \times S'/I \times L$$

wherein I is a current (1A constant), E is a voltage (V), S' is a sectional area of specimen (cm$^2$) and L is a distance of 4 cm (constant)
between electrodes for measuring the voltage.

Example 2

An expanded graphite sheet was prepared in the same manner as in Example 1 except that the components (raw materials) and the composition were as shown in Table 4.

Table 4

| Raw material | Proportion (weight) | Remark |
|---|---|---|
| Expanded graphite | 83% | Bulk density 0.8 g/cm$^3$ |
| Aramide pulp | 7% | Specific surface area 14 m$^2$/g |
| Carbon fibers | 4% | Pitch-based carbon fibers |
| Rubber latex | 6% | SBR-based rubber latex |
| Bonding agent | A small proportion | Used for bonding the latex |
| Total | 100% | |

The obtained expanded graphite sheet has the properties as shown in Table 5.

Table 5

| | Unit | Expanded graphite sheet |
|---|---|---|
| Thickness | mm | 0.25 |
| Density | g/cm$^3$ | 1.25 |
| Tensile strength | Kgf/cm$^2$ | 68 |
| Elongation percentage on rupture | % | 3.0 |
| Burst strength | Kgf/cm$^2$ | 1.04 |
| Front surface resistance | $\Omega$ | 1.4 |
| Electrical resistivity | $\mu\Omega$cm | 8000-9000 |

A heater was prepared using the above-obtained sheet and a reticulated reinforcement formed of cotton in place of the reticulated reinforcement formed of PVA by applying an adhesive to the sheet. Some properties of the heater are shown in Table 6.

Table 6

|  | Unit | Heater sheet |
|---|---|---|
| Thickness | mm | 0.26 |
| Basis weight | g/m$^2$ | 320 |
| Tensile strength | Kgf/cm$^2$ | 143 |
| Elongation percentage on rupture | % | 10.5 |
| Tear strength | Kgf | 8.1 |
| Burst strength | Kgf/cm$^2$ | 2.83 |
| Front surface resistance | Ω | 1.4 |
| Rear surface resistance | Ω | 1.0 X 10$^6$ or more |

Example 3

An expanded graphite sheet was prepared in the same manner as in Example 1 except that the components and the composition were as shown in Table 7.

Table 7

| Raw material | Proportion (weight) | Remark |
|---|---|---|
| Expanded graphite | 87% | Bulk density 0.8 g/cm$^3$ |
| Aramide pulp | 7% | Specific surface area 14 m$^2$/g |
| Latex | 6% | NBR-based latex |
| Bonding agent | A small proportion | Used for bonding the latex |
| Total | 100% |  |

The obtained expanded graphite sheet has the properties as shown in Table 8.

Table 8

|  | Unit | Heater sheet |
|---|---|---|
| Thickness | mm | 0.24 |
| Density | g/cm$^3$ | 1.23 |
| Tensile strength | kgf/cm$^2$ | 71 |
| Elongation percentage on rupture | % | 3.1 |
| Burst strength | kgf/cm$^2$ | 0.97 |
| Front surface resistance | Ω | 1.7 |
| Rear surface resistance | μΩcm | 9000-10000 |

A heater was prepared in the same manner as in Example 2 using the above-obtained sheet and a reticulated reinforcement formed of vinylon in place of the reticulated reinforcement formed of cotton. Some properties of the heater sheet are shown in Table 9.

Table 9

|  | Unit | Heater sheet |
|---|---|---|
| Thickness | Mm | 0.26 |
| Basis weight | g/m$^2$ | 325 |
| Tensile strength | Kgf/cm$^2$ | 159 |

Table 9   (continued)

|  | Unit | Heater sheet |
|---|---|---|
| Elongation percentage on rupture | % | 7.5 |
| Tear strength | kgf | 8.8 |
| Burst strength | Kgf/cm$^2$ | 3.15 |
| Front surface resistance | Ω | 1.7 |
| Rear surface resistance | Ω | $1.0 \times 10^6$ or more |

Examples 4 and 5

The heater prepared in Example 1 was further processed into two kinds of heaters, i.e. a heater without a slit cut as shown in Fig.5 (Example 4) and a heater with a slit cut as shown in Fig.6 (Example 5). The heat-generating properties of these heaters were determined (temperature-elevating test) in the atmosphere. The results are shown in Figs. 5 and 6. In the temperature-elevating test, a current was applied between metal terminals as shown in Figs. 5 and 6 under the conditions as specified in Table 10 to measure the temperature distribution on the surface of the sheet when the temperature became constant. In Figs. 5 and 6, the temperature (C°) was measured at specific points (9 points in Fig.5) and 7 points in Fig.6). The measured temperatures are shown. Indicated at 17 are terminals for power connector and at 18, a slit cut. When the slit cut was made, the electrical resistance can be adjusted by addition of carbon fibers.

Table 10

| Heater | Current (A) | Voltage (v) | Resistance (Ω) | Time (sec) |
|---|---|---|---|---|
| Ex.4 (Fig.5) (without slit cut) | 4 | 3.8 | 1.0 | 180 |
| Ex.5 (Fig.6) (slit cut) | 3 | 10 | 3.5 | 90 |

It is apparent from the results that the heater having a slit cut involves a higher resistance, elevates the temperature to a higher range despite a lower current and reaches the high temperature in a shorter time than when a slit cut is not made.

Applicability of the invention

The heater of the invention comprises an expanded graphite sheet and an electrical insulating reinforcement on at least one surface of the graphite sheet so that the strength and the flexibility are increased and heat can be uniformly applied. For this reason, the heater of the invention is the most suitable for use as a heater, especially as a heater for the seats of vehicles and can be also used to heat the floor, the wall and the carpet.

**Claims**

1.  A heat generator comprising an expanded graphite sheet and an electrical insulating reinforcement formed on at least one surface of the expanded graphite sheet.

2.  The heat generator according to claim 1, wherein the electrical insulating reinforcement is a reticulated one.

3.  The heat generator according to claim 2, wherein the reticulated reinforcement is one fabricated from a film of synthetic resin.

4.  The heat generator according to claim 2, wherein the reticulated electrical insulating reinforcement is one woven from natural fibers and/or synthetic fibers.

5.  The heat generator according to claim any one of claims 1 to 4, wherein the tensile strength is 100 kgf/cm$^2$ or more and the elongation percentage on rupture is 5.0% or more (each at a stress rate of 50 mm/min).

**6.** The heat generator according to any one of claims 1 to 5, wherein a slit cut is made.

**7.** The heat generator according to any one of claims 1 to 6, wherein a terminal or terminals for power connector are provided at its end.

**8.** The heat generator according to claim 7, wherein a terminal or terminals for power connector are in the form of a hook.

**9.** The heat generator according to any one of claims 1 to 8 which is a heater for vehicles.

Fig 1

Fig 2

Fig 3

Fig 4

Fig 5

Fig 6

Fig 7

Fig 8

## INTERNATIONAL SEARCH REPORT

| International application No. |
| --- |
| PCT/JP00/04910 |

**A. CLASSIFICATION OF SUBJECT MATTER**
Int.Cl$^7$ H05B 3/20, 3/14, 3/03

According to International Patent Classification (IPC) or to both national classification and IPC

**B. FIELDS SEARCHED**

Minimum documentation searched (classification system followed by classification symbols)
Int.Cl$^7$ H05B 3/20, 3/14, 3/03, 3/02

Documentation searched other than minimum documentation to the extent that such documents are included in the fields searched
Jitsuyo Shinan Koho          1940-1996     Toroku Jitsuyo Shinan Koho  1994-2000
Kokai Jitsuyo Shinan Koho  1971-2000     Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 1-183086, A (Sumitomo Metal Ind. Ltd.), 20 July, 1989 (20.07.89), (Family: none) | 1-9 |
| Y | US, 5780820, A (Matsushita Electric Co., Ltd.), 14 July, 1998 (14.07.98) & JP, 8-250264, A | 1-9 |
| Y | JP, 10-166494, A (Toyo Tanso K.K.), 23 June, 1998 (23.06.98), (Family: none) | 1-9 |
| Y | JP, 55-56392, A (Nippon Soken Inc.), (Family: none) 25 April, 1980 (25.04.80) | 1-5 |
| Y | JP, 6-96844, A (Toyo Tanso K.K.), 08 April, 1994 (08.04.94), (Family: none) | 6 |
| Y | JP, 52-119544, A (Super Ion K.K.), 07 October, 1977 (07.10.77), | 7,8 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 27 September, 2000 (27.09.00) | 10 October, 2000 (10.10.00) |

| Name and mailing address of the ISA/<br>Japanese Patent Office | Authorized officer |
| --- | --- |
| Facsimile No. | Telephone No. |

Form PCT/ISA/210 (second sheet) (July 1992)

16

**INTERNATIONAL SEARCH REPORT**

| | International application No. |
|---|---|
| | PCT/JP00/04910 |

C (Continuation). DOCUMENTS CONSIDERED TO BE RELEVANT

| Category* | Citation of document, with indication, where appropriate, of the relevant passages | Relevant to claim No. |
|---|---|---|
| | (Family: none) | |
| Y | JP, 7-249476, A (Shigeyuki YASUDA), 26 September, 1995 (26.09.95), (Family: none) | 9 |
| Y | JP, 2635296, B2 (Kabushiki Kaisha Dairin Shoji), 25 April, 1997 (25.04.97), (Family: none) | 9 |
| A | JP, 2931882, B2 (Toyo Tanso K.K.), 28 May, 1999 (28.05.99), (Family: none) | 1,5 |

Form PCT/ISA/210 (continuation of second sheet) (July 1992)